# FASCICULE DE BREVET EUROPEEN

(11) **EP 0 979 538 B1**
(45) Date de publication et mention de la délivrance du brevet: **17.10.2001**
(21) Numéro de dépôt: 98922876.2
(22) Date de dépôt: 27.04.1998
(51) Int. Cl.: H01Q 3/02, H01Q 3/08

(54) **SYSTEME D'ANTENNES, NOTAMMENT POUR POINTAGE DE SATELLITES DEFILANTS**
ANTENNENSYSTEM, INSBESONDERE ZUR AUSRICHTUNG AUF SATELLITEN IN NIEDRIGER UMLAUFBAHN
ANTENNA SYSTEM, IN PARTICULAR FOR POINTING MOVING SATELLITES

(30) Priorité: 30.04.1997 FR 9705407; 09.06.1997 FR 9707100
(43) Date de publication de la demande: 16.02.2000
(73) Titulaire: ALCATEL, 75008 Paris (FR)
(72) Inventeur: BOUSQUET, Jacques, F-78290 Croissy/Seine (FR); MENARD, Pierre, F-95100 Argenteuil (FR)
(74) Mandataire: Smith, Bradford Lee
(86) Numéro de dépôt international: FR9800842
(87) Numéro de publication internationale: WO9849745

(56) Documents cités:
- EP-A- 0 600 699
- US-A- 4 791 428
- US-A- 5 245 348

## Description

Le domaine de l'invention est celui des systèmes d'antennes, notamment pour pointage de satellites défilants. Plus précisément, la présente invention concerne un système à deux antennes au moins, ces antennes étant capables de pointer indépendamment dans une direction quelconque d'un angle solide.

Dans le cadre de la présente invention, on considère un système de transmission terrestre, installé par exemple sur le toit d'un immeuble. Ce système comporte au moins deux antennes, par exemple des antennes paraboliques, destinées à communiquer, en émission et/ou en réception, avec des satellites défilants. Ces antennes sont situées proches l'une de l'autre (c'est à dire co-localisées), pour des raisons d'encombrement, et/ou pour diminuer les longueurs des liaisons avec un modem unique, et/ou pour pouvoir les placer sous le même radôme de protection. Les deux antennes sont indépendamment orientables en azimut et en élévation, c'est à dire chacune montée sur un support distinct.

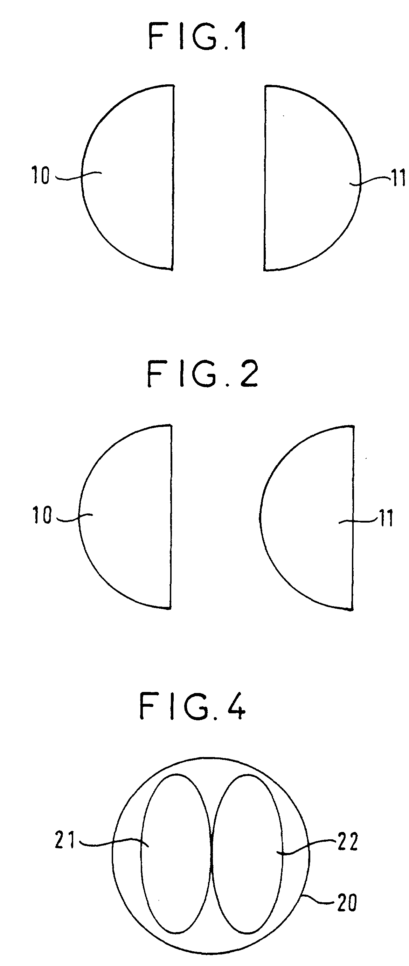

Le problème posé par un tel système est que, en fonction de la position des satellites et notamment lorsque leur élévation est faible, l'une des antennes peut venir à masquer l'autre antenne, comme illustré sur les figures 1 et 2. On considère que les antennes sont placées dans le même plan horizontal, c'est à dire qu'elles sont à la même hauteur.

Sur la figure 1, qui est une vue simplifiée de dessus d'un système à deux antennes paraboliques co-localisées, les deux antennes 10 et 11 pointent dans des directions opposées et aucune d'elles ne peut émettre ou recevoir des signaux, le masquage étant mutuel. Sur la figure 2, les antennes 10 et 11 sont pointées dans la même direction et l'antenne 11 masque de ce fait l'antenne 10.

Afin d'éviter ces masquages, il est possible d'éloigner les antennes les unes des autres mais, dans ce cas, les exigences de compacité ne sont plus remplies. Par ailleurs, il n'est plus possible de les protéger par un radôme commun.

La présente invention a notamment pour objectif de remédier à ces inconvénients.

Plus précisément, un des objectifs de l'invention est de fournir un système d'antennes, du type comportant au moins deux antennes, chacune des antennes étant capable de pointer indépendamment dans une direction quelconque d'un angle solide, ce système permettant de co-localiser les antennes sans jamais entraîner de masquage d'une des antennes par l'autre antenne.

Cet objectif, ainsi que d'autres qui apparaîtront par la suite, est atteint grâce à un système d'antennes, du type comportant au moins deux antennes, chacune des antennes étant capable de pointer indépendamment dans une direction quelconque d'un angle solide, ce système étant caractérisé en ce que les antennes sont montées sur un support commun coopérant avec des moyens de rotation de ce support commun, les moyens de rotation étant activés pour éviter un masquage d'une des antennes par l'autre des antennes.

Cette rotation du support commun permet notamment de disposer les antennes l'une à côté de l'autre en cas de visée dans la même direction ou dans des directions opposées.

Les antennes utilisées peuvent notamment être des antennes paraboliques de forme circulaire ou elliptique, c'est à dire des antennes passives, ou alors des antennes actives réalisées à partir d'éléments d'antennes ("patchs" en anglais).

Les moyens de rotation sont préférentiellement aptes à effectuer une rotation de ±45° par rapport à une position médiane.

Le système d'antennes est avantageusement recouvert par un radôme et l'invention s'applique notamment à la poursuite de satellites défilants.

D'autres caractéristiques et avantages de l'invention apparaîtront à la lecture de la description suivante d'un mode de réalisation préférentiel, donné à titre illustratif et non limitatif, et des dessins annexés dans lesquels :
- les figures 1 et 2 sont des vues simplifiées de dessus d'un système à deux antennes paraboliques co-localisées ;
- la figure 3 représente un système d'antennes selon la présente invention ;
- la figure 4 est une vue de dessus simplifiée d'un système d'antennes selon l'invention comprenant des antennes elliptiques.

Les figures 1 et 2 ont été décrites précédemment en référence à l'état de la technique.

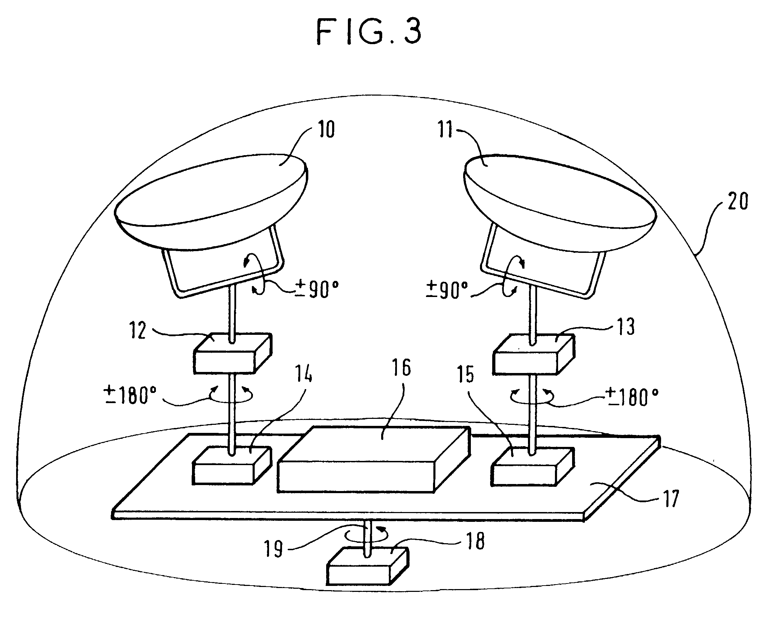

La figure 3 représente un système d'antennes selon la présente invention. Les antennes (10 et 11) sont ici au nombre de deux et constituées par des antennes paraboliques circulaires. Chaque antenne est montée sur un support et capable de pointer indépendamment dans une direction quelconque d'un angle solide, à l'aide de moyens 12. 13 de positionnement en élévation (par exemple chacun capable de faire effectuer une rotation en élévation de l'antenne avec laquelle il coopère de ±90°) et de moyens 14, 15 de positionnement en azimut (par exemple chacun capable de faire effectuer une rotation en azimut de l'antenne avec laquelle il coopère de ±180°). Des moyens d'émission/réception 16 communs sont prévus pour être raccordés aux antennes 10 et 11.

Selon l'invention, les antennes 10 et 11 sont montées sur un support commun 17 coopérant avec des moyens de rotation 18 de ce support commun 17. Plus précisément, les moyens 14, 15 de positionnement en azimut des antennes 10 et 11 sont ici montés sur le support commun 17. Les moyens de rotation 18 sont activés afin d'éviter un masquage d'une des antennes par l'autre des antennes. Ces moyens de rotation comprennent par exemple un moteur couplé directement à un arbre 19 fixé au support commun 17. La rotation du support commun 17 est par exemple réalisée sur au moins ±45° par rapport à une position médiane, en cas de présomption de gêne future d'une antenne par l'autre antenne. Cette présomption peut être basée sur l'analyse d'éphémérides ou sur celle de données provenant de codeurs de position des antennes 10 et 11. On assure ainsi en permanence une absence de masquage automatique d'une antenne par l'autre antenne, qu'elles soient dirigées dans des directions sensiblement opposées (Fig.1) ou sensiblement dans la même direction (Fig.2).

Les antennes peuvent également être constituées par des antennes actives.

L'invention permet notamment de placer le système d'antennes sous un même radôme de protection 20, ce radôme présentant alors un encombrement réduit.

Afin de limiter plus encore l'encombrement du système d'antennes selon l'invention, celles-ci peuvent avoir une forme ovale ou elliptique, tel que représenté à la figure 4. Cette figure est une vue de dessus simplifiée du système d'antennes selon l'invention, les antennes référencées 21 et 22 placées sous le radôme 20 visant le zénith. Les surfaces des antennes 21 et 22 sont égales à celles des antennes 10 et 11 pour présenter les mêmes performances. Le radôme 20 présente ainsi un encombrement réduit (de l'ordre de 20%) par rapport à celui de la figure 3.

L'invention s'applique notamment, mais non exclusivement, à la poursuite de satellites défilants.

## Revendications

1. Système d'antennes, du type comportant au moins deux antennes (10, 11, 21, 22), chacune desdites antennes (10, 11, 21, 22) étant capable de pointer indépendamment dans une direction quelconque d'un angle solide, **caractérisé en ce que** lesdites antennes (10, 11, 21, 22) sont montées sur un support commun (17) coopérant avec des moyens de rotation (18) dudit support commun (17), lesdits moyens de rotation (18) étant activés pour éviter un masquage d'une desdites antennes (10, 11, 21, 22) par l'autre desdites antennes (10, 11, 21, 22).

2. Système selon la revendication 1, **caractérisé en ce que** lesdites antennes (10, 11, 21, 22) sont des antennes paraboliques.

3. Système selon la revendication 1, **caractérisé en ce que** lesdites antennes sont des antennes actives.

4. Système selon l'une des revendications 1 à 3, **caractérisé en ce que** lesdits moyens de rotation (18) sont aptes à effectuer une rotation de ±45° par rapport à une position médiane.

5. Système selon l'une des revendications 1 à 4, **caractérisé en ce qu'**il est recouvert par un radôme (20).

6. Système selon l'une des revendications 1 à 5, **caractérisé en ce que** lesdites antennes (21, 22) sont elliptiques.

7. Système selon l'une des revendications 1 à 6, **caractérisé en ce qu'**il est appliqué à la poursuite de satellites défilants.

## Patentansprüche

1. Antennensystem vom Typ mit wenigstens zwei Antennen (10, 11, 21, 22) wobei jeder der Antennen (10, 11, 21, 22) unabhängig in eine beliebige Richtung eines Raumwinkels ausrichtbar ist, **dadurch gekennzeichnet, dass** die Antennen (10, 11, 21, 22) auf einem gemeinsamen Träger (17) montiert sind, der mit Mitteln zum Drehen (18) des gemeinsamen Trägers (17) zusammenwirkt, wobei die Mittel zum Drehen (18) aktiviert werden, um eine Verdeckung einer der Antennen (10, 11, 21, 22) durch die andere der Antennen (10, 11, 21, 22) zu verhindern.

2. System nach Anspruch 1, **dadurch gekennzeichnet, dass** die Antennen (10, 11, 21, 22) Parabolantennen sind.

3. System nach Anspruch 1, **dadurch gekennzeichnet, dass** die Antennen aktive Antennen sind.

4. System nach einem der Ansprüche 1-3, **dadurch gekennzeichnet, dass** die Mittel zum Drehen (18) in der Lage sind, eine Drehung von ±45° in Bezug auf eine Mittelposition durchzuführen.

5. System nach einem der Ansprüche 1-4, **dadurch gekennzeichnet, dass** es von einem Radom (20) abgedeckt ist.

6. System nach einem der Ansprüche 1-5, **dadurch gekennzeichnet, dass** die Antennen (21, 22) elliptisch sind.

7. System nach einem der Ansprüche 1-6, **dadurch gekennzeichnet, dass** es für die Verfolgung von Satelliten in erdnaher Umlaufbahn eingesetzt wird.

## Claims

1. An antenna system including at least two antennas (10, 11, 21, 22), each of said antennas (10, 11, 21, 22) being capable of pointing independently of the other(s) in any direction within a solid angle, **characterized in that** said antennas (10, 11, 21, 22) are mounted on a common support (17) co-operating with rotation means (18) for rotating said common support (17), said rotation means (18) being activated to prevent masking of one of said antennas (10, 11, 21, 22) by another of said antennas (10, 11, 21, 22).

2. A system according to claim 1, **characterized in that** said antennas (10, 11, 21, 22) are parabolic antennas.

3. A system according to claim 1, **characterized in that** said antennas are active antennas.

4. A system according to any of claims 1 to 3, **characterized in that** said rotation means (18) are adapted to effect a rotation of ±45° relative to a median position.

5. A system according to any of claims 1 to 4, **characterized in that** it is covered by a radome (20).

6. A system according to any of claims 1 to 5, **characterized in that** said antennas (21, 22) are elliptical.

7. A system according to any of claims 1 to 6, **characterized in that** it is applied to tracking non-geostationary satellites.
